# EUROPEAN PATENT SPECIFICATION

(11) **EP 4 495 418 B1**
(45) Date of publication and mention of the grant of the patent: **14.01.2026**
(21) Application number: 23186339.0
(22) Date of filing: 19.07.2023
(51) Int. Cl.: F03D 13/20, F03D 80/00, F03D 13/10

(54) **SUPPORT STRUCTURE INSIDE A NACELLE OF A WIND TURBINE**
STÜTZSTRUKTUR IN EINER GONDEL EINER WINDTURBINE
STRUCTURE DE SUPPORT À L'INTÉRIEUR D'UNE NACELLE D'UNE ÉOLIENNE

(43) Date of publication of application: 22.01.2025
(73) Proprietor: Nordex Energy SE & Co. KG, 22419 Hamburg (DE)
(72) Inventor: WACKROW, Torsten, 22419 Hamburg (DE)
(74) Representative: Epping - Hermann - Fischer

(56) References cited:
- EP-A1- 2 740 928
- EP-A1- 3 372 823
- CN-U- 206 000 685
- US-A1- 2017 022 966
- US-A1- 2019 203 700
- US-A1- 2022 397 101

## Description

The invention relates to a support structure inside a nacelle of a wind turbine, and a wind turbine comprising a support structure.

Wind turbines are widely known from the prior art and are used to convert wind energy into mechanical output, and subsequently into electrical energy.

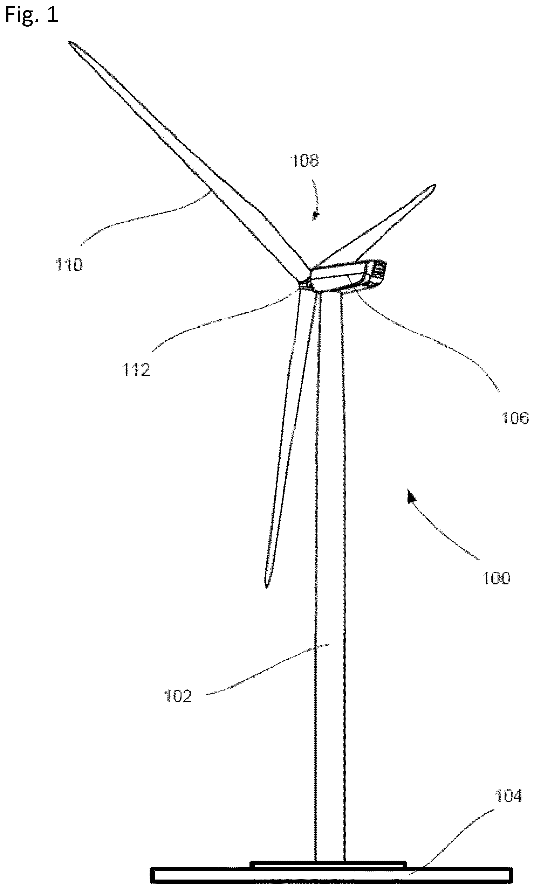

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, in particular aerodynamic forces resulting from the interaction of wind with the blades. This rotational movement is transmitted to the generator via the rotor shaft, with or without a gearbox. The generator converts the mechanical energy of the rotor 108 into electrical energy.

Electrical equipment, including the generator and a transformer, is required to be placed close to the rotor 108 inside the nacelle 106 to keep mechanical and electrical transmission losses low and to protect the equipment from environmental influences. The mounting of relatively heavy equipment at an elevated position, i.e., operating height of the nacelle 106 above the tower 102, requires a strong and relatively stiff mounting structure to be attached at the upper end of the tower 102.

EP 3 447 283 B1 discloses a nacelle for a wind turbine and a generator frame. The generator frame is part of a supporting structure comprising a machine frame and the generator frame. The generator frame is constructed as a y-shaped structure in such a way that a central support and two supporting arms which directly adjoin the central support form the y-shaped structure. The y-shaped structure stiffens the generator frame and allows heavy components to be placed above and along the generator frame perpendicular to an axis of the tower, thereby creating more useable space inside the nacelle.

US 2022/0397101 A1 shows a support structure with two supporting portions attached to a bed frame of a wind turbine. The two supporting portions are joined together by a vertical beam such that the two supporting portions arranged above each other within the height of the vertical beam as well as the bed frame.

EP 3 372 823 A1 shows a support frame within a nacelle of a wind turbine. The support frame comprises an inner portion referred to as the machine frame or the inner support frame, and a surrounding/outer portion (also referred to as an outer support frame) that is attached along the perimeter of the machine frame/inner support frame. The outer support frame shows different support levels or gangways and/or passages inside the nacelle.

As the size of wind turbines and their associated electrical equipment grows due to ever increasing demand for renewable energy, there is a continuous need for improved support structures inside a nacelle of a wind turbine. Preferably, such support structures should be strong enough to carry heavy equipment, small enough to be transported by road during pre-assembly and/or to the installation site, and enable safe and easy access to the nacelle for service personnel, once the support structure is attached to a tower. Another consideration is the dynamic effect such as the vibrational effect on the wind turbine, in particular, the tower, due to placement of heavy equipment on the generator frame. It is necessary to ensure that the positions of heavy equipment on the generator frame relative to the tower do not result in adverse vibrational characteristics, such as the resonance.

According to a first aspect of the present disclosure, a support structure inside a nacelle of a wind turbine is disclosed. The support structure comprises a connecting portion configured to be attached to a main frame of the wind turbine, a first supporting portion for supporting at least a generator of the wind turbine, and a second supporting portion for supporting at least one other component of the wind turbine, in particular at least one electrical component of the wind turbine. In an attached state, e.g., when the connecting portion is attached to the main frame of the wind turbine, the first supporting portion adjoins the connecting portion, the second supporting portion adjoins the connecting portion, and the second supporting portion is arranged below the first supporting portion.

Among other features, it was ascertained that space below a generator can be used to install at least one other component of a wind turbine, if a support structure comprises a first supporting portion and a second supporting portion arranged at different levels, e.g., vertically spaced apart. This in turn allows reduction in length of the individual supporting portions and, hence, the overall length of the support structure and the nacelle.

It also enables to bring the components supported by the support structure closer to the main frame and thus the tower. By arranging relatively heavy components, such as a generator and a transformer, closer to the main frame of the wind turbine, a natural frequency of the support structure getting closer to frequencies of vibrations caused by the wind and/or rotation of the rotor can be avoided, and therefore, the risk of unwanted resonance can be mitigated.

A relatively short support structure also allows heavier equipment to be mounted at different levels using beams or other structural parts having essentially the same strength. Inversely, the relatively short support structure with different levels allows the use of a slimmer, lighter structural parts for mounting components of a similar weight, the components which otherwise would be mounted further away from the main frame as in case of a conventional generator frame.

Using different portions or parts to form a support structure also enables modularity, and hence simplifies transportation and assembly of the nacelle and its components. Moreover, the support frame itself may be used for lifting or lowering of components, e.g., by using the upper, first supporting portion as support for ropes and winches for lifting or lowering components arranged on the lower, second supporting portion.

The provision of different levels also facilitates easy access to the generator and other equipment placed inside the nacelle. Among others, different access paths can be realized using the different levels. Moreover, large components such as the generator, converter, etc., can be accessed from different sides easily.

The second supporting portion is arranged at a lower level than the connecting portion. In such an arrangement, part of the electrical equipment is arranged at an elevated height relative to the connecting portion forming an access point to the main frame, whereas at least one other component of the wind turbine is mounted at a lower level relative to the level of the connecting portion. Apart from gaining workspace due to the two-level arrangement, such an arrangement also simplifies access to the supporting portions from the connecting portion, as the height difference between, for example, floor levels of the three parts can be kept low. Put differently, the connecting portion may serve as an intermediate or mezzanine floor between an upper floor formed by the first supporting portion and a lower floor formed by the second supporting portion.

In yet another embodiment, the first supporting portion may lie in the same level or substantially same level as the connecting portion while the second supporting portion remains below the first supporting portion as well as the connecting portion.

In still another embodiment, the first supporting portion is at an elevated height compared to both the second supporting portion and the connecting portion.

In at least one embodiment, the connecting portion further comprises at least one of a first access way, a second access way and/or an interconnecting pathway. A first access way, in particular a first gangway, ramp, stair and/or ladder, may interconnect the first supporting portion with at least one service entry of the main frame. In an embodiment, the at least one service entry may be a nacelle front entry (e.g., opening) defined at a frontal portion of the main frame. A second access way, in particular a second gangway, ramp, stair and/or ladder, may interconnect the second supporting portion with at least one service entry of the main frame (e.g., the nacelle front entry or another service entry of the main frame). An interconnecting pathway, in particular a third gangway, ramp, stair and/or ladder, may interconnect the second supporting portion with the first supporting portion and/or the connecting portion within the support structure.

For example, the first access way may lead from the upper, first supporting portion down via a ramp or stairway to an upper surface of the connecting portion and, from there, around the outside of the main frame to its front entry for the nacelle in the main frame. A second, completely independent access way may lead from the second, lower supporting portion up a ramp or a gangway directly leading to a rear portion of the main frame. The interconnecting pathway may be, for example, a ladder, stairway or a ramp leading down from the second supporting portion directly to the first supporting portion and/or the connecting portion. Thus, the interconnecting pathway enables service personnel to change directly between the two service levels, or via the connecting portion. Thus, three different access ways to several working spaces inside nacelle can be provided. Among others, this enables a second escape route in case one of the first or second access ways should be blocked.

In at least one embodiment, the connecting portion comprises two or more supporting arms, each of the supporting arms configured to be attached, on a first end, to a respective attachment point of the main frame, and, on a second end, to the first and second supporting portions. For example, the supporting arms may be attached on diametrically opposite sides of the main frame to form Y-shaped structure, thereby strengthening the stiffness of the connecting portion.

In at least one embodiment, the support structure further comprises a first joining portion of the first supporting portion or the connecting portion, and/or a second joining portion of the second supporting portion or the connecting portion. The first joining portion is inclined at a first angle with respect to a main direction of a main portion of the connecting portion, wherein the first angle lies within 30° and 150° relative to the to the main direction of the main portion of the connecting portion. The second joining portion is inclined at a second angle with respect to the main direction of the main portion, wherein the second angle lies within -30° and -150° relative to the to the main direction of the main portion of the connecting portion.

The first and second joining portions transmit the mechanical forces from the first and second supporting portions, respectively, to the main portion of the connecting portion and result in the described split-level arrangement of the two supporting portions. For example, the first joining portion may be inclined with a positive angle or not inclined at all with respect to a plane of the connecting portion, whereas the second joining portion may be inclined with a negative angle or not inclined at all with respect to the plane of the connecting portion, depending on the inclination of the first joining portion. To have a two-level configuration, one of the preferred orientations is that either the first joining portion or the second joining portion is always inclined (e.g., with at least an angle of 30°) relative to the plane of the connecting portion, or both the joining portions are inclined (e.g., with at least an angle of 30°) relative to the plane of the connecting portion.

In some embodiments, the angle of inclination of one of the first and the second joining portions may be greater than 90° relative to the plane of the connecting portion, depending on design features of the support structure and space availability. For example, the first and the second joining portions may be inclined at +135° and -135°, respectively, relative to the plane of the connecting portion. For angles greater than 90°, say between 110° and 150°, the connecting portion may serve as an intermediate supporting portion between the upper, first supporting portion and the lower, second supporting portion. The connecting portion serving as the intermediate supporting portion may support one or more components of the wind turbine, which may or may not be associated with the electrical components. This allows enhanced compactness within the nacelle with respect to mounting of the components.

In at least one embodiment, at least one of the connecting portion and the first supporting portion is configured to support a portion of a drive train of the wind turbine. This enables forces originating from mechanical components of the wind turbine to be transmitted to the main frame.

In at least one embodiment, the support structure comprises two halves, which are detachably joined. Among others, this facilitates transportation of parts of a two-level support structure using conventional modes of transport, e.g., trucks, to the manufacturer of the support structure or to a construction site, at which the wind turbine is erected.

In at least one embodiment, each of the first supporting portion and the second supporting portion is structured as at least one of a plate, an array of interconnected bars, and an array of interconnected beams. For example, each supporting portion can be formed of a girder structure comprising longitudinal and cross metal beams, which are covered with a metal plate formed as a floor for mounting and accessing equipment in the respective service floor. Such structures can be easily manufactured and assembled and provide the required mechanical strength for holding heavy equipment.

In at least one embodiment, the second supporting portion comprises at least one base section for carrying the at least one other component, the at least one base section being detachable from the second supporting portion for loading and unloading the at least one other component in the attached state the support structure. Having a detachable section enables, amongst others, heavy components to be lowered from the second supporting portion to the ground below the nacelle.

In at least one embodiment, the first supporting portion comprises at least one load transmission point arranged above the at least one base section and configured such that the at least one base section and/or the at least one other component can be raised or lowered from the at least one load transmission point. In this way, the upper, first supporting portion can be used to support mechanical loads during raising or lowering of heavy equipment relative to (i.e., from or to) the second, lower supporting portion.

In at least one embodiment, the support structure further comprises a transverse beam extending from the first supporting portion and configured such that the at least one other component can be lowered from the transverse beam. By having at least one transverse beam extending, for example, laterally or sideways beyond the first supporting portion, the at least one component can be hoisted on a side of the nacelle.

In at least one embodiment, the transverse beam comprises a first section attached to the first supporting portion, and at least one second section extendable, in particular in a telescopic manner, in a lateral direction of the nacelle, such that the at least one other component can be attached to the transverse beam in a retracted position of the second section and can be lowered from the support structure in an extended position of the second section.

In at least one embodiment, the connecting portion is manufactured in one or more parts as a steel or cast-iron construction, or any other metal or alloying combination. In addition, or alternatively, the first and second supporting portions are manufactured in one or more parts as a steel or cast-iron construction, or any other metal or alloying combination. Steel, cast-iron or similar metal materials provide the required strength and flexibility to transmit high mechanical forces for holding heavy equipment and attaching it firmly to the main frame.

According to a second aspect of the present disclosure, a wind turbine comprising a tower, a nacelle attached to the tower and supporting a rotor, and a plurality of rotor blades attached to the rotor, is disclosed. The nacelle comprises a main frame attached to the tower and supporting the rotor and a support structure according to the first aspects, wherein the support structure is attached to the main frame. The nacelle further comprises a generator arranged on the first supporting portion of the support structure and mechanically coupled to the rotor, at least one other component, in particular at least one electrical component electrically coupled to the generator arranged on the second supporting portion of the support structure, and a nacelle housing enclosing at least the main frame, the support structure, the generator and the at least one other component.

Such a wind turbine enables the mounting of multiple, bulky and relatively heavy components close to the upper end of a tower supporting the nacelle and the rotor and, at the same time, enables easy access to all components.

In at least one embodiment, the second supporting portion comprises at least one base section for carrying the at least one other component, the base section being detachable from the second supporting portion for loading and unloading the at least one other component in the attached state of the support structure, wherein the base section corresponds with, e.g., is arranged vertically above, an opening formed in a floor of the nacelle housing. In this way, components arranged on the second, lower supporting portion can be removed from inside the nacelle through the floor of the second supporting portion and the enclosing nacelle housing in a detached state of the base section, e.g., after removing a mechanical connection between the base section and the rest of the second supporting portion.

Further advantages, features and further developments are set out by the following exemplary embodiments, which are explained in conjunction with the attached figures. The same or similar elements or elements acting in the same way are provided with the same reference numerals in the following figures, even if they belong to different embodiments.
Figure 1 shows main components of a wind turbine.
Figure 2 shows a perspective view of a first support structure attached to a main frame of a wind turbine.
Figure 3 shows a cross-section through a nacelle comprising the support structure of Figure 2.
Figure 4A shows a perspective view of a second support structure attached to a main frame of a wind turbine.
Figure 4B shows a schematic cross-section through a further support structure.
Figure 5 shows a perspective view of a third support structure of a wind turbine.
Figures 6 to 8 show different perspective views of a support structure with multiple access and interconnecting ways.
Figures 9 to 11 show perspective views of different support structures enabling hoisting loads.

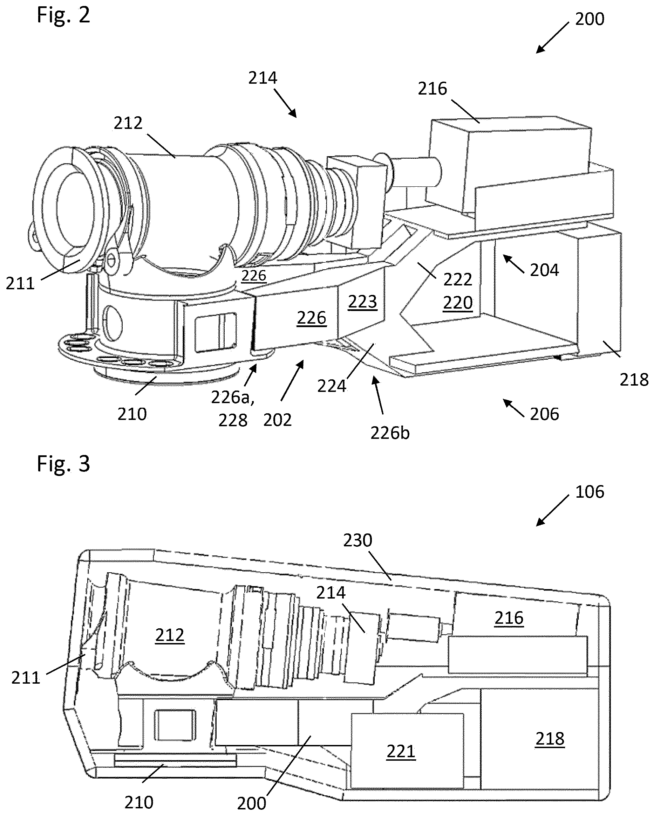

Figure 2 shows a perspective view of a first support structure 200 to be arranged inside a nacelle of a wind turbine, such as the wind turbine 100 shown in Figure 1. The support structure 200 comprises a connecting portion 202, a first supporting portion 204 and a second supporting portion 206. The first supporting portion may be arranged elevated with respect to the connecting portion 202. For example, a floor level of the first supporting portion 204 may lie vertically above a floor level or upper level of the connecting portion 202. The second supporting portion 206 may be arranged vertically below the first supporting portion 204 to form a two-level structure with the upper first supporting portion 204. In the configuration shown in Figure 2, the second supporting portion 206 may be arranged lower with respect to the connecting portion 202. For example, a floor level of the second supporting portion 206 may lie vertically below a floor level or below a lower surface level of the connecting portion 202. Accordingly, the entire support structure 200 forms a split-level arrangement, with an upper floor formed by the first supporting portion 204, a lower floor formed by the second supporting portion 206, and an intermediate or mezzanine floor formed by the connecting portion 202. In an embodiment, the supporting levels of the first and second supporting portions 204, 206 may be parallel or substantially parallel.

The support structure 200 is attached, by means of the connecting portion 202, to a main frame 210 of the wind turbine. In other words, the connecting portion 202 may serve as a joining or attaching link between the main frame 210 and the first and the second supporting portions 204, 206. For this, the connecting portion 202 may extend in a longitudinal direction of the nacelle 106 between the main frame 210 and the first, second supporting portions 204, 206. In particular, the main frame 210 sits on the upper end of a tower (not shown in Figure 2), while the support structure 200 extends along the longitudinal direction of the nacelle to form a cantilever beam like arrangement. On top of the main frame 210, a rotor bearing assembly supports a rotor shaft 211 (e.g., at two positions) enclosed within a bearing housing 212. The rotor shaft 211 is connected to a drive train 214, which transmits the rotation of the rotor to a generator 216 arranged on the first supporting portion 204 forming an upper equipment level. In the depicted embodiment, the drive train 214 comprises a gearbox for connecting the main rotor shaft and with an axis of a rotor of the generator 216, which may be offset from one another. However, in other embodiments, the rotor shaft may be directly coupled with and arranged in line with an axis a rotor of the generator 216.

In a space at least partly below the generator 216 and/or the first supporting portion 204, other components of the wind turbine 100 are arranged on the second supporting portion 206 forming a lower equipment level. In particular, a transformer 218 for transforming the electrical energy provided by the generator 260 to a desired voltage range may be arranged at a back end of the second supporting portion 206 as shown. One or more further components, including, but not limited to electrical equipment such as a converter 220, an electrical cabinet 221 (shown in Figure 3), may also be arranged on the second supporting portion 206, for example, on one of its sides as shown in Figure 2. Apart from these components, other components associated with the wind turbine like the cooling lines, and equipment associated with cooling such as a heat exchanger, radiator, pump, valves, sensors, etc., may be supported on the second supporting portion 206. Further, the first supporting portion 204 and/or the connecting portion 202 may support a part of the drive train 214. For example, the connecting portion 202 may support a portion of the bearing housing 212 and/or gearbox.

In the embodiment shown in Figure 2, the connecting portion 202 may be formed as a relatively solid, metal or alloy part, for example, a cast-iron part. The first and second connecting portions 204 and 206 may also be formed by a metal or an alloy part, for example, as steel plates attached to the connecting portion 202. For this purpose, the connecting portion 202 comprises a first joining portion 222 which may be inclined upwards with respect to a main direction of a main portion 223 of the connecting portion 202. Moreover, the connecting portion 202 comprises a second joining portion 224 which may be inclined downwards with respect to the main direction of main portion 223 of the connecting portion 202. That is to say, a distal end of the connecting portion 202 facing away from the main frame 210 diverges into a vertically split structure for holding the structural members (e.g., steel plates) forming the first supporting portion 204 and the second supporting portion 206.

In an embodiment, the general plane of extension of the connecting portion 202 along the longitudinal direction of the nacelle may be horizontal (i.e., at 0°) or slightly inclined (i.e., greater than 0°) relative to the horizontal plane. At a proximal end, the connecting portion 202 comprises two (or more) supporting arms 226, which are attached to respective connection points 228 on opposite sides of the main frame 210. For example, first ends 226a of the two supporting arms 226 as shown in Fig. 2 may be attached to the main frame 210 on diametrically opposite sides for symmetric load distribution by both the supporting arms 206 to the main frame 210. In an embodiment, the supporting arms 226 may be attached to the main frame 210 by means including but not limited to fastening, welding, or any other mechanical and/or non-mechanical means. At an opposite second end 226b, the supporting arms 226 are attached to the supporting portions 204 and 206, e.g., by the first joining portion 222 and second joining portion 224, respectively. The two supporting arms 226 are spaced from one another in the horizontal plane, thereby forming an open space there between, and diverge towards the main frame 210. The described arrangement with diverging attachment points in a horizontal and vertical plane at both ends 226a and 226b of the connecting portion 202 leads to a relatively high stiffness of the connecting portion 202 and therefore allow relatively large forces and moments to be transmitted from the supporting portions 204 and 206 towards the main frame 210. In an embodiment, the supporting arms 206 may be structured as beams which have adept structural properties to transmit loads and moments between the supporting portions 205, 206 and the main frame 210.

In another embodiment, the geometry of the connecting portion 202 may be such that a height (or depth) of the connecting portion 202 may match with the height (or the depth) of a flange of the main frame 210 (best shown in Fig. 3). This results in the first supporting portion 204 to remain elevated relative to the main frame 210, and the second supporting portion 206 lie at a lower level than the main frame 210. This way, the height of the main frame 210 and the connecting portion 202 can still be kept minimal (e.g., optimal for strength and/or transportation), regardless of the dimensions and the orientation of the first and the second supporting portions 204, 206.

Although Fig. 2 depicts an upward and a downward inclination of the first and the second joining portions 222, 224, respectively, other arrangements may also be possible. For example, in one embodiment, the first joining portion 222 may lie in the same level (i.e., have zero inclination) or substantially same level (i.e., have a negligible inclination, e.g., of less than 5°) as the connecting portion 202, such that the first connecting portion 204 lies along the same plane as the connecting portion 202. In such a construction, the second joining portion 224 has an inclination (say 30° or higher) with respect to the main direction of the main portion 223 of the connecting portion 202, such that the second supporting portion 206 extends below the first supporting portion 204. Similarly, the second supporting portion 206 may extend along the same level or substantially same level as the connecting portion 202, such that the first supporting portion 204 is at an elevated height compared to both the second supporting portion 206 and the connecting portion 202. In such a construction, the first joining portion 222 has an inclination (say 30° or higher) with respect to the main direction of the main portion 223 of the connecting portion 202. In an embodiment, the first and the second joining portions 222, 224 may be reinforced by stiffeners and/or gusset plates.

Figure 3 shows a cross-section to a nacelle 106 comprising the support structure 200 and the main frame 210, explained with respect to Figure 2 above. It further shows that the support structure 200, the main frame 210, the rotor bearing housing 212, and the drive train 214, as well as the electrical components 216 to 221, which are arranged slightly differently in the configuration of Figure 3, are enclosed by a nacelle housing 230 or cover.

Figure 3 shows that room below the generator 216 supported by the first supporting portion 204 can be efficiently used to place several further components, including a transformer 218 and an electrical cabinet 221. This improves proximity of the heavier components like the transformer, converter, etc., to the tower and enhances space utility inside the nacelle. This also results in reduction of the overall length of the support structure 200 itself, as well as overall length of the nacelle 106 and the nacelle housing 230. As a result, the natural frequency of the support structure 200, when it is attached with its proximal end to the main frame 210 of a wind turbine, is optimized to create safe operating conditions. In an embodiment, the geometry of the nacelle cover may be adapted to meet the geometry, orientation and dimensions of the support structure 200, as shown in FIG. 3.

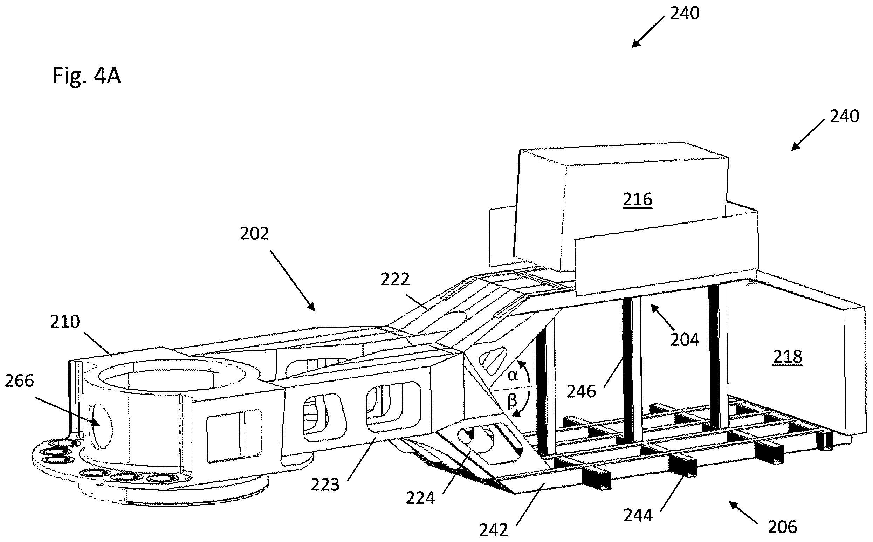

Figure 4A shows a second support structure 240 comprising a connection structure 202, a first supporting portion 204 and a second supporting portion 206. The relative arrangement and shapes of the various components are similar to those of the first support structure 200 and its components described above with respect to Figure 2. Accordingly, only the differences of the second support structure 240 are described in the following.

As can be seen in Figure 4A, the second support structure 206 may be formed from a lattice of longitudinal beams 242 and cross beams 244. Moreover, vertical beams 246 interconnect the lower, second supporting portion 206 with the upper, first supporting portion 204. The beam structure comprising beams 242 to 246 is relatively lightweight and further stiffens the support structure 240. Moreover, it enables a modular design and easy manufacturing of the first support structure 204 and the second support structure 206. In an embodiment, one of the first supporting portion 204 and the second supporting portion 206 may be composed of array of interconnecting beams, interconnecting bars or interconnecting closed structures like pipes, while the other of the first supporting portion 204 and the second supporting portion 206 may be a simple plate like structure.

In the embodiment shown in Figure 4A, the connecting portion 202 comprises two supporting arms 226 attached to respective connection points 228 of the main frame 210. The two supporting arms 226 may be formed as cast-iron parts or any other metal or alloying combination and lie at a horizontal or an inclined level defined, for example, by a height of main frame 210. The first supporting portion 204 comprises a first joining portion 222, which may be formed as another cast-iron part or as a steel girder or from any other metal or alloying combination. Similarly, the lower supporting portion 206 comprises a second joining portion 224, which may be configured as a separate cast iron or steel girder part or any other metal or alloying combination. The first and second joining portions 222 and 224 adjoin the connecting portion 202 at a first (positive) angle α and second (negative) angle β, respectively. Any one or both of the first angle α and second angle β may lie anywhere between 30° and 150° or -30° and -150°, respectively, as measured from the distal direction of a main direction (or plane) of the main portion 223 and indicated in Figure 4A. For example, if the first joining portion is at same level as the main direction (or plane) of the main portion 223 (i.e., at 0° relative to the main direction), then the second joining portion 224 is inclined at -30° (downwards) relative to both the main direction (or plane) of the main portion 223 and the first joining portion 222. When both of the first and second joining portions 222, 224 are inclined (upwards and downwards, respectively) with respect to main direction (or plane) of the main portion 223, then the minimum angle of each of the first and second joining portions 222, 224 between the main direction (or plane) of main portion 223 must be 30° and -30°, respectively. In the described embodiment, the first joining portion 222 is inclined upwards, for example, at about 35°, and the second joining portion 224 is inclined downwards at about -50° from the distal direction of a main direction (or plane) of the main portion 223. Thus, the total angle between the first and second joining portions 222 and 224 is about 85°.

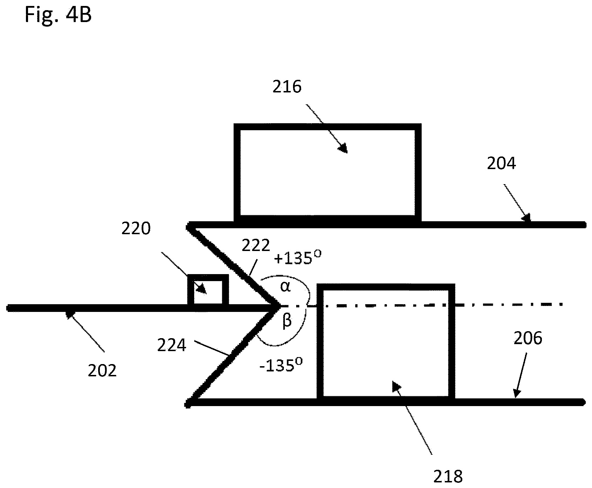

In some embodiments, the angle of inclination of any one or both of the first and the second joining portions α, β may be absolutely greater than 90° and -90° relative to the main direction (or plane) of the main portion 223 of the connecting portion 202, depending on design features of the support structure 200 and space availability. For example, as shown in Figure 4B, the first joining portion and the second joining portion may be inclined at +135° and -135°, respectively, relative to the plane of the connecting portion 202 (e.g., to resemble a "Σ" symbol). For angles greater than 90°, say between 110° and 150°, the connecting portion 202 may serve as an intermediate supporting portion between the upper, first supporting portion 204 and the lower, second supporting portion 206. The connecting portion 202 serving as the intermediate supporting portion may support one or more components of the wind turbine, which may be one of the aforementioned electrical components 220 or 221, another electrical component or may not be an electrical components at all, e.g., a mechanical component. This allows enhanced stacking or mounting of the components, proximity of various components for interconnection, and overall compactness of the nacelle interior. In an embodiment, the first and the second joining portions 222, 224 inclining beyond 90° relative to the connecting portion 202 may be reinforced by stiffeners and/or gusset plates (not shown).

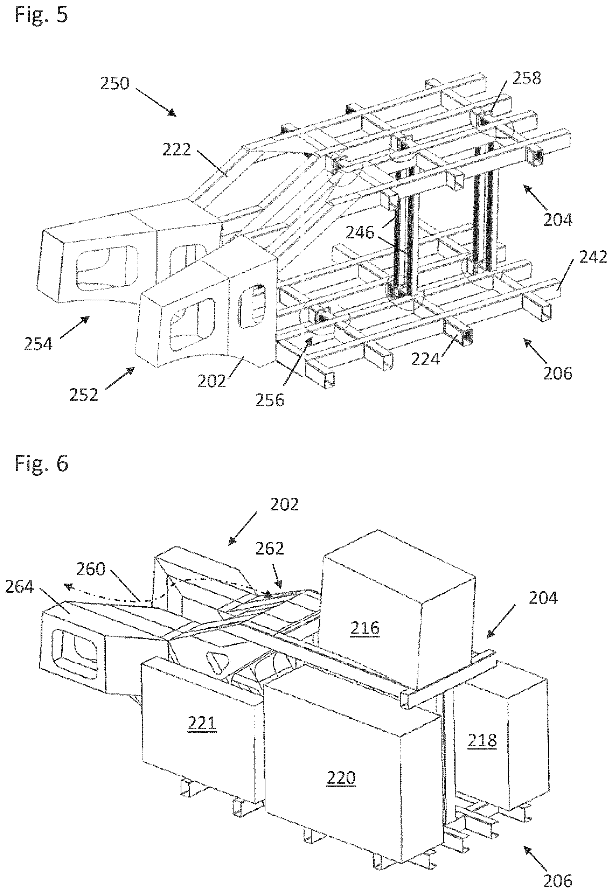

Figure 5 shows a third variant of a support structure 250 for a nacelle. The support structure 250 is similar to the support structure 240 shown in Figure 4A. Accordingly, only the differences will be described below.

As shown in Figure 5, the support structure 250 is formed from two mirror-symmetrical halves 252 and 254, which can be removably or permanently attached to one another at respective connection points 256 at a late stage of the assembly, for example during final assembly of the support structure 250 by the manufacturer of the nacelle 1006 and/or at the construction site for the wind turbine 100. This may be achieved, for example, by screwing, bolting or welding together corresponding flanges 258 at respective internal ends of cross beams 244 of the halves 252 and 254. In the embodiment shown in Figure 5, a total of six connection points 256 is shown, but this may vary depending on the configuration of the halves 252 and 254 and the required strength of the support structure 250. Also note that the halves 252 and 254 comprises separate right and left vertical beams 246, such that the respective parts of the first supporting portion 204 and the second supporting portion 206 are attached to one another even before the two halves 252 and 254 of the support structure 250 are attached to one another using the attachment points 256.

In another embodiment, the halves 252 and 254 may be asymmetrical in nature where the left half 254 and the right half 252 (when viewed from the main frame 210 side) have different number of longitudinal beams 242, and/or different sized longitudinal beams 242 and/or cross beams 244. Other possibilities that impart asymmetricity to the halves 252, 254 may also be realized. The symmetricity or asymmetricity may be decided depending on the number of components, nature of components, nacelle design, and so on.

Moreover, note that the lower, second supporting portion 206 of the third support structure 250 directly abuts the lower end of a connecting portion 202. In contrast, the upper, first supporting portion 204 is connected indirectly to the connecting portion 202 by respective joining portions 222 as shown. This may be attained through a tapered geometry of the connecting portions 202 resulting in elimination of materials required to be attached as joining portions corresponding to the lower, second supporting portion 206.

Figures 6 to 8 show different pathways for service personnel to access electrical components and other equipment arranged on a first and second supporting portions 204 and 206 of a support structure.

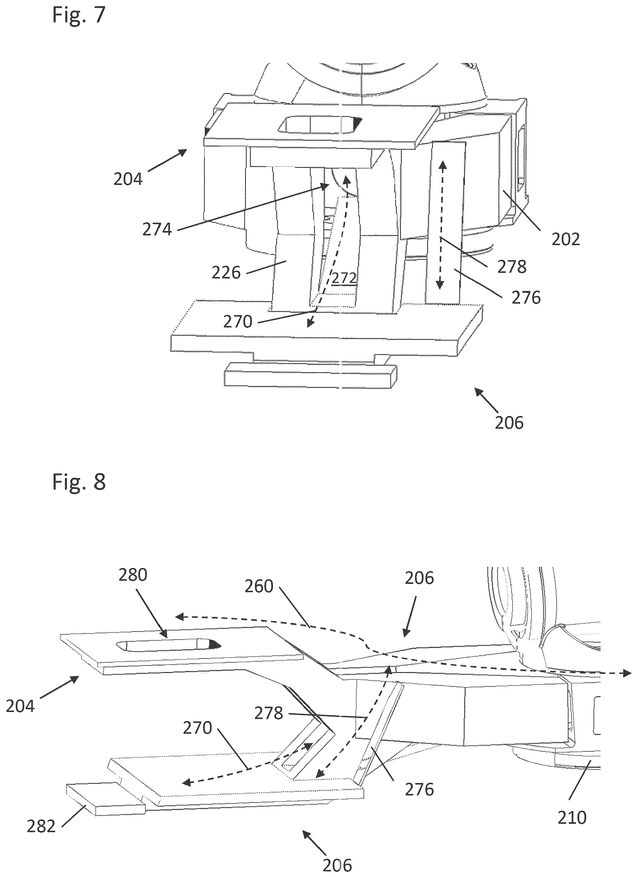

In particular, Figure 6 shows that the front side of a generator 216 may be accessed using a first access way 260, leading down from the first supporting portion 204 over a first ramp 262 formed by a first joining portion 222 to an upper surface 264 of the connecting portion 202. Although not shown in Figure 6, the first access path 260 continues around the outside of a main frame over stairs or a ladder towards at least one service entry, for example, a nacelle front entry 266 (shown, for example, in Figure 4A) defined at the frontal portion of the main frame 210. Additionally, access to the tower internal may be gained through another service entry, e.g. a service entry defined at a rear portion of the main frame 210 diametrically opposite to the service entry 266 (shown, for example, in Figure 7).

Figure 7 shows a second access way 270 leading from the second supporting portion 206 via a second ramp 272 directly to a rear service entry 274 in the main fame 210. Note that the ramp 272 is arranged in a space formed between two supporting arms 226 of the connecting portion 202 through the joining portions 222, 224.

Moreover, Figure 7 also shows a ladder 276 interconnecting, in this case, the upper surface 264 of the connecting portion 202 with the floor level of the second supporting portion 206. Thus, in the case that the rear service entry 274 or the second ramp 272 is blocked, service personnel can leave the second supporting portion 206 by means of the ladder 276 forming an interconnecting pathway 278 to join the first pathway 260 as explained above with respect to Figure 6. Inversely, if a nacelle front entry 266 of the main frame 210 is blocked, service personnel can climb down from the upper surface 264 of the connecting portion 202 via the ladder 276 to the second supporting portion 206 and exit the nacelle 106 via the second ramp 272 and the rear service entry 274.

While not shown in the figures, an interconnecting pathway between the second access way 270 and the first access way 260 may also lead directly from the second supporting portion 206 to the first supporting portion 204. For example, a ladder and a corresponding manhole may interconnect the lower and upper equipment levels of the support structure.

The different access routes are also shown in Figure 8. Figure 8 further shows that an access opening 280 is arranged in the first supporting portion 204, which allows the generator 216 (not shown in Figures 7 and 8) to be accessed from below, and may also be used to form an interconnection pathway as detailed above. Moreover, Figure 8 shows that the second supporting portion 206 has a lowered platform 282 for placement of particularly high electrical equipment, such as a bulky transformer (not shown in Figure 8).

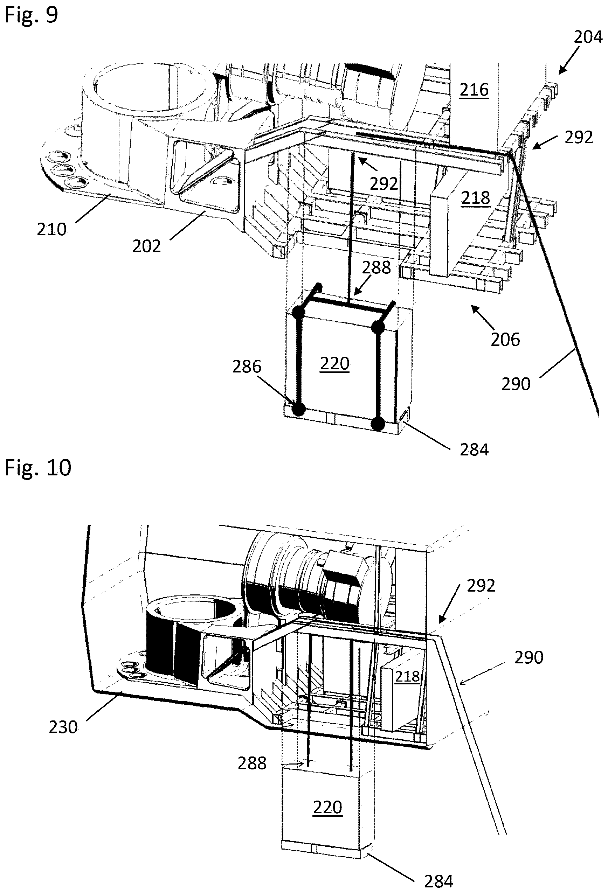

Figures 9 to 11 show three different configurations of a supporting structure for a nacelle for hoisting bulky and/or heavy components arranged on the second supporting portion 206. Attention is drawn to the fact that, due to the two-level arrangement, such components may not be easily maneuvered into the lower working space using external hoisting arrangements, such as a truck-mounted crane. Accordingly, the different supporting structures shown in Figures 9 to 11 include integrated hoisting arrangements, as further detailed below.

In the embodiment shown in Figure 9, the second supporting portion 206 comprises a supporting base section 284, which can be detached from the remaining parts of the second supporting portion 206. For example, retractable bolts may be used to fasten or unfasten the base section 284 to/from the remaining parts of a steel girder structure forming the load bearing part of the second supporting portion 206.

A heavy electrical component such as a transformer 218 or an electrical cabinet 221 or an electrical converter 220 may be mounted on a surface of the base section 284. In the embodiment shown in Figure 9, a lifting frame 286 is first attached to the base section 284 to transfer the weight of the electrical converter 220 to a central attachment point 288 for attaching a crane cable 290. The crane cable 290 is guided via one or more load transmission points 292 formed by or attached to respective cross beams of the first supporting portion 204. For example, secondary cable guideways or rollers may be attached to the cross beams, or the crane cable 290 may directly be guided by a suitably formed part of a cross beam. Once the crane cable 290 is secured, the base section 284 can be unfastened, and the component arranged on the base section 284 can be lowered from or raised to the second supporting portion 206 using an external winch via the crane cable 290.

Figure 10 shows an alternative arrangement for hoisting a heavy component. In this embodiment, a housing of the component is sufficiently strong to transfer the force generated by its own weight. Two crane cables 290 are attached directly to respective attachment points 288 of the converter 220. In this case, no support frame 286 is required. In this case, the heavy component 220 may be first lifted a little bit of the floor of the second supporting portion 206, giving easy access to the base section 284, e.g., for unfastening the base section 284 completely, or moving the base section 284 (e.g., hinged or sliding movement) relative to rest of the second supporting portion 206. In case of unfastening, the base section 284 may first be attached to bottom of the heavy component 220 before unfastening completely from rest of second supporting portion 206 so that both the heavy component 220 and the base section 284 may be lowered via the void formed in the second supporting portion 206 where the base section 284 was initially present. Alternately, the base section 284 may be moved, for example, swiveled via one or more hinges, so that the void may be formed in the second supporting portion 206 for lowering the heavy component 220. For the embodiments described with respect to Figures 9 and 10, an internal crane already present in the nacelle 106 may be used to lift or lower the components 218 and/or 220 into or out of the nacelle 106, respectively.

A nacelle housing 230, particularly the nacelle floor, may have a corresponding opening, e.g., a hatch, on its lower side, which corresponds to or aligns with the position of the base section 284. In this case, any component arranged on the base section 284 may be lowered from or raised to the second supporting portion 206 even after the nacelle housing 230 encloses the support structure. In the case that multiple electric or other bulky and/or heavy components are to be lowered from the second supporting portion 206, a plurality of openings in the nacelle housing 230 and a corresponding plurality of detachable base sections 284 may be formed in the support structure.

In a further variation, not shown in the figures, a winch for winding up one or more crane cable 290 may be arranged inside the nacelle 106, for example on the first or second support structure 204 or 206, respectively.

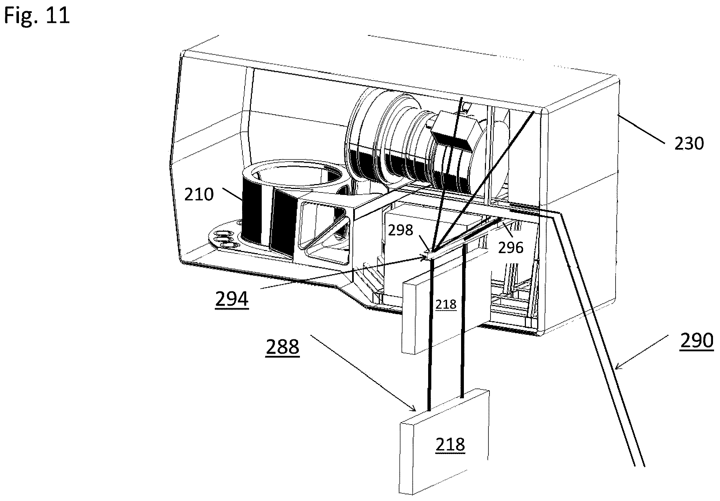

Figure 11 shows yet another way of hoisting loads into and out of the lower equipment space formed between the first and second supporting portions 204 and 206. In this case, rather than detaching a section of the second supporting portion 206, the first supporting portion 204 comprises a transverse beam 294 which extends beyond the side wall of the nacelle housing 230, thus facilitating winching up or down of the bulky and/or heavy components from a lateral side of the support structure. As detailed above, the nacelle side cover may be opened and removed to allow extension of the transverse beam 294 and corresponding transfer (i.e., loading and unloading) of the heavy component 218 using the transverse beam 294.

In the depicted embodiment, the transverse beam 294 is configured as a telescopic crane arm, with a stationary first section 296 and an extendible second section 298. To remove a component from the second support structure 206, the component is first attached using corresponding crane cables 290 and respective attachment points of the component or a lifting frame (not shown) to the second section 298 of the transverse beam 294 in its retracted position. Then a corresponding side cover of the nacelle housing 230 is removed, and the second section 298 of the telescopic crane arm is extended in a telescopic manner in a lateral direction until the component to be lowered is outside the nacelle housing 230, as indicated by the upper box 218 in Figure 11. Thereafter, the component can be lowered using the crane cables 290 as indicated by the lower box 218 in Figure 11, for example using an external winch on the ground or a winch integrated into the nacelle 106 as described above. In the same way, new components can be hoisted into the nacelle 106, for example for replacing damaged components. In an embodiment, the first section 296 of the transverse beam 294 can be moved and adjusted longitudinally and fixed at a particular place depending on size and position of electrical components. Once the first section 296 is adjusted and fixed at a particular location, the second section 298 can extend telescopically to perform the described operation.

The various embodiments described above have a number of advantages over support structures of nacelles known from the prior art. In particular, the length of the supporting frame can be significantly reduced, leading to an improved (e.g., higher) eigenfrequency of the support structure in a mounted position. This also helps to move the eigenfrequency of the support structure away from the eigenfrequency of a tower 102 and/or rotor 108 and thereby reduces mechanical stress due to dynamic loads on the wind turbine 100. In this way, an undesired resonance can be avoided. It also reduces a bending moment and the stresses of the vertical loads.

At the same time, the described embodiments can be formed from relatively small, modular parts, which can be transported using conventional trucks, rather than exceptional heavy goods transports. This in turn greatly reduces manufacturing costs and additional effort when transporting components to a construction site. Moreover, the described design enables easy and safe access to all components based within the nacelle, using a plurality of different access routes. The modular design also allows the heavier components to be loaded into/unloaded from the nacelle using any of the known lifting and lowering arrangements, for e.g., a crane.

### Reference signs

- 100: wind turbine
- 102: tower
- 104: foundation
- 106: nacelle
- 108: rotor
- 110: rotor blade
- 112: rotor hub
- 200: (first) support structure
- 202: connecting portion
- 204: first supporting portion
- 206: second supporting portion
- 210: main frame
- 211: rotor shaft
- 212: rotor bearing housing
- 214: drive train
- 216: generator
- 218: transformer
- 220: converter
- 221: electrical cabinet
- 222: first joining portion
- 223: main portion
- 224: second joining portion
- 226: supporting arm
- 228: attachment point
- 230: nacelle housing
- 240: (second) support structure
- 242: longitudinal beams
- 244: cross beams
- 246: vertical beams
- 248: second vertical beams
- 250: (third) support structure
- 252: (right) half
- 254: (left) half
- 256: attachment points
- 258: flange
- 260: first access way
- 262: first ramp
- 264: upper surface
- 266: nacelle front entry
- 270: second access way
- 272: second ramp
- 274: rear service entry
- 276: ladder
- 278: interconnecting pathway
- 280: access opening
- 282: lowered platform
- 284: base section
- 286: lifting frame
- 288: attachment point
- 290: crane cable
- 292: load transmission point
- 294: transverse beam
- 296: (stationary) first section
- 298: (extendible) second section

## Claims

1. A support structure (200, 240, 250) inside a nacelle (106) of a wind turbine (100), the support structure (200, 240, 250) comprising:
- a connecting portion (202) configured to be attached to a main frame (210) of the wind turbine (100);
- a first supporting portion (204) for supporting at least a generator (216) of the wind turbine (100); and
- a second supporting portion (206) for supporting at least one other component (218, 220, 221) of the wind turbine (100), in particular at least one electrical component of the wind turbine (100);
wherein,
- the first supporting portion (204) adjoins the connecting portion (202),
- the second supporting portion (206) adjoins the connecting portion (202),
- the second supporting portion (206) is arranged below the first supporting portion (204), and
- the second supporting portion (206) is arranged at a lower level than the connecting portion (202).

2. The support structure (200, 240, 250) of claim 1, wherein the first supporting portion (204) is arranged at a higher level than the connecting portion (202).

3. The support structure (200, 240, 250) of claim 1 or 2, further comprises at least one of the following:
- a first access way (260), in particular a first gangway, ramp (262), stair and/or ladder, interconnecting the first supporting portion (204) with at least one service entry of the main frame (210); and
- a second access way (270), in particular a second gangway, ramp (272), stair and/or ladder, interconnecting the second supporting portion (206) with at least one service entry of the main frame (210); and/or
- an interconnecting pathway (278), in particular a third gangway, ramp, stair and/or ladder (276), interconnecting the second supporting portion (206) with the first supporting portion (204) and/or the connecting portion (202) within the support structure (200, 240, 250).

4. The support structure (200, 240, 250) of any one of claims 1 to 3, wherein the connecting portion (202) comprises two or more supporting arms (226), each of the supporting arms (226) configured to be attached, on a first end (226a), to a respective attachment point (228) of the main frame (210), and, on a second end (226b), to the first and the second supporting portions (204, 206).

5. The support structure (200, 240, 250) of any one of claims 1 to 4, further comprising:
- a first joining portion (222) of the first supporting portion (204) or the connecting portion (202), wherein the first joining portion (222) is inclined at a first angle (α) with respect to a main direction of a main portion (223) of the connecting portion (202), wherein the first angle (α) lies within 30° and 150° relative to the to the main direction of the main portion (223) of the connecting portion (202); and/or
- a second joining portion (224) of the second supporting portion (206) or the connecting portion (202), wherein the second joining portion (224) is inclined at a second angle (β) with respect to the main direction of the main portion (223), wherein the second angle (β) lies within -30° and -150° relative to the to the main direction of the main portion (223) of the connecting portion (202).

6. The support structure (200, 240, 250) of any one of claims 1 to 5, wherein at least one of the connecting portion (202) and the first supporting portion (204) is configured to support a portion of a drive train (214) of the wind turbine (100).

7. The support structure (250) of any one of claims 1 to 6, wherein the support structure (250) comprises two halves (252, 254), which are detachably joined.

8. The support structure (200, 240, 250) of any one of claims 1 to 7, wherein each of the first supporting portion (204) and the second supporting portion (206) is structured as at least one of a plate, an array of interconnected bars and an array of interconnected beams (242, 244).

9. The support structure (200, 240, 250) of any one of claims 1 to 8, wherein the second supporting portion (206) comprises at least one base section (284) for carrying the at least one other component, the at least one base section (284) being detachable from the second supporting portion (206) for loading and unloading the at least one other component in an attached state of the support structure (200, 240, 250).

10. The support structure (200, 240, 250) of claim 9, wherein the first supporting portion (204) comprises at least one load transmission point (292) arranged above the at least one base section (284) and configured such that the at least one base section (284) and/or the at least one other component can be raised or lowered from the at least one load transmission point (292).

11. The support structure (200, 240, 250) of any one of claims 1 to 10, wherein the support structure (200, 240, 250) further comprises a transverse beam (294) extending from the first supporting portion (204) and configured such that the at least one other component can be lowered from the transverse beam (294).

12. The support structure of claim 11, wherein the transverse beam (294) comprises:
- a first section (296) attached to the first supporting portion (204); and
- at least one second section (298) extendible, in particular in a telescopic manner, in a lateral direction of the nacelle (106), such that the at least one other component can be attached to the transverse beam (294) in a retracted position of the second section (298), and can be lowered from the support structure (200, 240, 250) in an extended position of the second section (298).

13. The support structure (200, 240, 250) of any one of claims 1 to 12, wherein:
- the connecting portion (202) is manufactured in one or more parts as a steel or cast-iron construction, or any other metal or alloying combination; and/or
- the first and the second supporting portions (204, 206) are manufactured in one or more parts as a steel or cast-iron construction, or any other metal or alloying combination.

14. A wind turbine (100), comprising a tower (102), a nacelle (106) attached to the tower (102) and supporting a rotor (108), and a plurality of rotor blades (110) attached to the rotor (108), wherein the nacelle (106) comprises:
- a main frame (210) attached to the tower (102) and supporting the rotor (108);
- a support structure (200, 240, 250) according to any one of claims 1 to 13, wherein the support structure (200, 240, 250) is attached to the main frame (210);
- a generator (216) arranged on the first supporting portion (204) of the support structure (200, 240, 250) and mechanically coupled to the rotor (108);
- at least one other component (218, 220, 221), in particular at least one electrical component electrically coupled to the generator (216) arranged on the second supporting portion (206) of the support structure (200, 240, 250); and
- a nacelle housing (230) enclosing at least the main frame (210), the support structure (200, 240, 250), the generator (216) and the at least one other component.

15. The wind turbine (100) as claimed in claim 14, wherein the second supporting portion (206) comprises at least one base section (284) for carrying the at least one other component, the base section (284) being detachable from the second supporting portion (206) for loading and unloading the at least one other component in the attached state of the support structure (200, 240, 250), and wherein the base section (284) corresponds with an opening formed in a floor of the nacelle housing (230).

## Patentansprüche

1. Stützstruktur (200, 240, 250) innerhalb einer Gondel (106) einer Windkraftanlage (100), wobei die Stützstruktur (200, 240, 250) umfasst:
- einen Verbindungsabschnitt (202), der dazu eingerichtet ist, an einem Hauptrahmen (210) der Windkraftanlage (100) befestigt zu werden;
- einen ersten Stützabschnitt (204) zum Stützen mindestens eines Generators (216) der Windkraftanlage (100) und
- einen zweiten Stützabschnitt (206) zum Stützen mindestens eines weiteren Bauteils (218, 220, 221) der Windkraftanlage (100), insbesondere mindestens eines elektrischen Bauteils der Windkraftanlage (100);
wobei
- der erste Stützabschnitt (204) an den Verbindungsabschnitt (202) angrenzt,
- der zweite Stützabschnitt (206) an den Verbindungsabschnitt (202) angrenzt,
- der zweite Stützabschnitt (206) unterhalb des ersten Stützabschnitts (204) angeordnet ist und
- der zweite Stützabschnitt (206) auf einer niedrigeren Ebene als der Verbindungsabschnitt (202) angeordnet ist.

2. Stützstruktur (200, 240, 250) nach Anspruch 1, wobei der erste Stützabschnitt (204) auf einer höheren Ebene als der Verbindungsabschnitt (202) angeordnet ist.

3. Stützstruktur (200, 240, 250) nach Anspruch 1 oder 2, die ferner mindestens eines der folgenden Merkmale umfasst:
- einen ersten Zugangsweg (260), insbesondere eine erste Gangway, Rampe (262), Treppe und/oder Leiter, der den ersten Stützabschnitt (204) mit mindestens einem Wartungszugang des Hauptrahmens (210) verbindet; und
- einen zweiten Zugangsweg (270), insbesondere eine zweite Gangway, Rampe (272), Treppe und/oder Leiter, der den zweiten Stützabschnitt (206) mit mindestens einem Wartungszugang des Hauptrahmens (210) verbindet; und/oder
- einen Verbindungsweg (278), insbesondere eine dritte Gangway, Rampe, Treppe und/oder Leiter (276), der den zweiten Stützabschnitt (206) mit dem ersten Stützabschnitt (204) und/oder dem Verbindungsabschnitt (202) innerhalb der Stützstruktur (200, 240, 250) verbindet.

4. Stützstruktur (200, 240, 250) nach einem der Ansprüche 1 bis 3, wobei der Verbindungsabschnitt (202) zwei oder mehr Stützarme (226) umfasst, wobei jeder der Stützarme (226) dazu eingerichtet ist, an einem ersten Ende (226a) an einem jeweiligen Befestigungspunkt (228) des Hauptrahmens (210) und an einem zweiten Ende (226b) an dem ersten und dem zweiten Stützabschnitt (204, 206) befestigt zu werden.

5. Stützstruktur (200, 240, 250) nach einem der Ansprüche 1 bis 4, ferner umfassend:
- einen ersten Verbindungsabschnitt (222) des ersten Stützabschnitts (204) oder des Verbindungsabschnitts (202), wobei der erste Verbindungsabschnitt (222) in einem ersten Winkel (α) in Bezug auf eine Hauptrichtung eines Hauptabschnitts (223) des Verbindungsabschnitts (202) geneigt ist, wobei der erste Winkel (α) zwischen 30° und 150° relativ zur Hauptrichtung des Hauptabschnitts (223) des Verbindungsabschnitts (202) liegt; und/oder
- einen zweiten Verbindungsabschnitt (224) des zweiten Stützabschnitts (206) oder des Verbindungsabschnitts (202), wobei der zweite Verbindungsabschnitt (224) in einem zweiten Winkel (β) in Bezug auf die Hauptrichtung des Hauptabschnitts (223) geneigt ist, wobei der zweite Winkel (β) innerhalb von -30° und -150° relativ zur Hauptrichtung des Hauptabschnitts (223) des Verbindungsabschnitts (202) liegt.

6. Stützstruktur (200, 240, 250) nach einem der Ansprüche 1 bis 5, wobei mindestens einer des Verbindungsabschnitts (202) und des ersten Stützabschnitts (204) dazu eingerichtet ist, einen Abschnitt eines Antriebsstrangs (214) der Windkraftanlage (100) zu stützen.

7. Stützstruktur (250) nach einem der Ansprüche 1 bis 6, wobei die Stützstruktur (250) zwei Hälften (252, 254) umfasst, die lösbar zusammengefügt sind.

8. Stützstruktur (200, 240, 250) nach einem der Ansprüche 1 bis 7, wobei jeder des ersten Stützabschnitts (204) und des zweiten Stützabschnitts (206) als mindestens eines von einer Platte, einer Anordnung miteinander verbundener Stangen und einer Anordnung miteinander verbundener Träger (242, 244) ausgebildet ist.

9. Stützstruktur (200, 240, 250) nach einem der Ansprüche 1 bis 8, wobei der zweite Stützabschnitt (206) mindestens einen Basisteil (284) zum Tragen des mindestens einen weiteren Bauteils umfasst, wobei der mindestens eine Basisteil (284) vom zweiten Stützabschnitt (206) lösbar ist, um das mindestens eine weitere Bauteil in einem befestigten Zustand der Stützstruktur (200, 240, 250) zu laden und zu entladen.

10. Stützstruktur (200, 240, 250) nach Anspruch 9, wobei der erste Stützabschnitt (204) mindestens einen Lastübertragungspunkt (292) umfasst, der oberhalb des mindestens einen Basisteils (284) angeordnet und so eingerichtet ist, dass der mindestens eine Basisteil (284) und/oder das mindestens eine weitere Bauteil von dem mindestens einen Lastübertragungspunkt (292) angehoben oder abgesenkt werden kann/können.

11. Stützstruktur (200, 240, 250) nach einem der Ansprüche 1 bis 10, wobei die Stützstruktur (200, 240, 250) ferner einen Querträger (294) umfasst, der sich vom ersten Stützabschnitt (204) erstreckt und so eingerichtet ist, dass das mindestens eine weitere Bauteil vom Querträger (294) abgesenkt werden kann.

12. Stützstruktur nach Anspruch 11, wobei der Querträger (294) umfasst:
- einen ersten Teil (296), der an dem ersten Stützabschnitt (204) befestigt ist; und
- mindestens einen zweiten Teil (298), der insbesondere teleskopartig in einer lateralen Richtung der Gondel (106) ausfahrbar ist, so dass das mindestens eine weitere Bauteil in einer eingefahrenen Position des zweiten Teils (298) an dem Querträger (294) befestigt und in einer ausgefahrenen Position des zweiten Teils (298) von der Stützstruktur (200, 240, 250) abgesenkt werden kann.

13. Stützstruktur (200, 240, 250) nach einem der Ansprüche 1 bis 12, wobei:
- der Verbindungsabschnitt (202) in einem oder mehreren Teilen als Stahl- oder Gusseisenkonstruktion oder einer anderen Metall- oder Legierungskombination hergestellt ist und/oder
- der erste und der zweite Stützabschnitt (204, 206) in einem oder mehreren Teilen als Stahl- oder Gusseisenkonstruktion oder einer anderen Metall- oder Legierungskombination hergestellt sind.

14. Windkraftanlage (100), umfassend einen Turm (102), eine an dem Turm (102) befestigte und einen Rotor (108) stützende Gondel (106) und eine Mehrzahl von an dem Rotor (108) befestigten Rotorblättern (110), wobei die Gondel (106) umfasst:
- einen Hauptrahmen (210), der an dem Turm (102) befestigt ist und den Rotor (108) stützt;
- eine Stützstruktur (200, 240, 250) nach einem der Ansprüche 1 bis 13, wobei die Stützstruktur (200, 240, 250) an dem Hauptrahmen (210) befestigt ist;
- einen Generator (216), der an dem ersten Stützabschnitt (204) der Stützstruktur (200, 240, 250) angeordnet und mechanisch mit dem Rotor (108) gekoppelt ist;
- mindestens ein weiteres Bauteil (218, 220, 221), insbesondere mindestens ein elektrisch mit dem Generator (216) gekoppeltes elektrisches Bauteil, das am zweiten Stützabschnitt (206) der Stützstruktur (200, 240, 250) angeordnet ist; und
- ein Gondelgehäuse (230), das zumindest den Hauptrahmen (210), die Stützstruktur (200, 240, 250), den Generator (216) und das mindestens eine weitere Bauteil umschließt.

15. Windkraftanlage (100) nach Anspruch 14, wobei der zweite Stützabschnitt (206) mindestens einen Basisteil (284) zum Tragen des mindestens einen weiteren Bauteils umfasst, wobei der Basisteil (284) vom zweiten Stützabschnitt (206) lösbar ist, um das mindestens eine weitere Bauteil im befestigten Zustand der Stützstruktur (200, 240, 250) zu laden und zu entladen, und wobei der Basisteil (284) mit einer in einem Boden des Gondelgehäuses (230) ausgebildeten Öffnung korrespondiert.

## Revendications

1. Structure de support (200, 240, 250) à l'intérieur d'une nacelle (106) d'une éolienne (100), la structure de support (200, 240, 250) comprenant :
- une section de liaison (202) conçue pour être fixée à un châssis principal (210) de l'éolienne (100) ;
- une première section de maintien (204) destinée à supporter au moins un générateur (216) de l'éolienne (100) ; et
- une deuxième section de maintien (206) destinée à supporter au moins un autre composant (218, 220, 221) de l'éolienne (100), en particulier au moins un composant électrique de l'éolienne (100) ;
sachant que
- la première section de maintien (204) est adjacente à la section de liaison (202),
- la deuxième section de maintien (206) est adjacente à la section de liaison (202),
- la deuxième section de maintien (206) est disposée sous la première section de maintien (204), et
- la deuxième section de maintien (206) est disposée à un niveau inférieur à celui de la section de liaison (202).

2. La structure de support (200, 240, 250) selon la revendication 1, sachant que la première section de maintien (204) est disposée à un niveau supérieur à celui de la section de liaison (202).

3. La structure de support (200, 240, 250) selon la revendication 1 ou 2, comportant en outre au moins l'un des éléments suivants :
- un premier chemin d'accès (260), en particulier une première passerelle, une rampe (262), un escalier et/ou une échelle, qui relie la première section de maintien (204) à au moins un accès de maintenance du châssis principal (210) ; et
- un deuxième chemin d'accès (270), en particulier une deuxième passerelle, une rampe (272), un escalier et/ou une échelle, qui relie la deuxième section de maintien (206) à au moins un accès de maintenance du châssis principal (210) ; et/ou
- un chemin de liaison (278), en particulier une troisième passerelle, une rampe (276), un escalier et/ou une échelle, qui relie la deuxième section de maintien (206) à la première section de maintien (204) et/ou à la section de liaison (202) dans la structure de support (200, 240, 250).

4. La structure de support (200, 240, 250) selon l'une quelconque des revendications 1 à 3, sachant que la section de liaison (202) comprend deux bras de support (226) ou plus, chacun des bras de support (226) étant conçu pour être fixé, au niveau d'une première extrémité (226a), à un point de fixation respectif (228) du cadre principal (210) et, au niveau d'une deuxième extrémité (226b), aux première et deuxième sections de maintien (204, 206).

5. La structure de support (200, 240, 250) selon l'une quelconque des revendications 1 à 4, comprenant en outre :
- une première section de connexion (222) de la première section de maintien (204) ou de la section de liaison (202), la première section de connexion (222) étant inclinée par rapport à une direction principale d'une section principale (223) de la section de liaison (202) selon un premier angle (α), le premier angle (α) étant compris entre 30° et 150° par rapport à la direction principale de la section principale (223) de la section de liaison (202) ; et/ou
- une deuxième section de connexion (224) de la deuxième section de maintien (206) ou de la section de liaison (202), la deuxième section de connexion (224) étant inclinée par rapport à la direction principale de la section principale (223) selon un deuxième angle (β), le deuxième angle (β) étant compris entre -30° et -150° par rapport à la direction principale de la section principale (223) de la section de liaison (202).

6. La structure de support (200, 240, 250) selon l'une quelconque des revendications 1 à 5, sachant que la section de liaison (202) et/ou la première section de maintien (204) sont conçues pour supporter une partie d'une chaîne cinématique (214) de l'éolienne (100).

7. La structure de support (250) selon l'une quelconque des revendications 1 à 6, sachant que la structure de support (250) comporte deux moitiés (252, 254) assemblées de manière amovible.

8. La structure de support (200, 240, 250) selon l'une quelconque des revendications 1 à 7, sachant que la première section de maintien (204) et la deuxième section de maintien (206) sont chacune structurées sous la forme d'une plaque et/ou d'un agencement de barres reliées entre elles et/ou d'un agencement de poutres reliées entre elles (242, 244).

9. La structure de support (200, 240, 250) selon l'une quelconque des revendications 1 à 8, sachant que la deuxième section de maintien (206) comporte au moins une zone de base (284) destinée à supporter ledit au moins un autre composant, ladite au moins une zone de base (284) pouvant être détachée de la deuxième section de maintien (206) afin d'introduire et de retirer ledit au moins un autre composant dans un état monté de la structure de support (200, 240, 250).

10. La structure de support (200, 240, 250) selon la revendication 9, sachant que la première section de maintien (204) comporte au moins un point de transfert de charge (292) disposé au-dessus de ladite au moins une zone de base (284) et conçu de telle sorte que ladite au moins une zone de base (284) et/ou ledit au moins un autre composant puissent être soulevés ou abaissés à partir dudit au moins un point de transfert de charge (292).

11. La structure de support (200, 240, 250) selon l'une quelconque des revendications 1 à 10, sachant que la structure de support (200, 240, 250) comprend en outre une traverse (294) s'étendant à partir de la première section de maintien (204) et étant conçue de telle sorte que ledit au moins un autre composant puisse être abaissé à partir de la traverse (294).

12. La structure de support selon la revendication 11, sachant que la traverse (294) comprend :
- une première zone (296) fixée à la première section de maintien (204) ; et
- au moins une deuxième zone (298) pouvant être déployée particulièrement de manière télescopique dans une direction latérale de la nacelle (106), de telle sorte que ledit au moins un autre composant puisse être fixé à la traverse (294) dans une position rétractée de la deuxième zone (298) et puisse être abaissé de la structure de support (200, 240, 250).

13. La structure de support (200, 240, 250) selon l'une quelconque des revendications 1 à 12, sachant que :
- la section de liaison (202) est fabriquée en une ou plusieurs parties sous forme de construction en acier ou en fonte ou sous forme d'une autre combinaison de métaux ou d'alliages ; et/ou
- les première et deuxième sections de maintien (204, 206) sont fabriquées en une ou plusieurs parties sous forme de construction en acier ou en fonte ou sous forme d'une autre combinaison de métaux ou d'alliages.

14. Éolienne (100) comprenant une tour (102), une nacelle (106) fixée à la tour (102) et supportant un rotor (108), et une pluralité de pales de rotor (110) fixées au rotor (108), la nacelle (106) comprenant :
- un châssis principal (210) fixé à la tour (102) et supportant le rotor (108) ;
- une structure de support (200, 240, 250) selon l'une quelconque des revendications 1 à 13, la structure de support (200, 240, 250) étant fixée au châssis principal (210) ;
- un générateur (216) fixé à la première section de maintien (204) de la structure de support (200, 240, 250) et couplé mécaniquement au rotor (108) ;
- au moins un autre composant (218, 220, 221), en particulier au moins un composant électrique, couplé électriquement au générateur (216) et disposé sur la deuxième section de maintien (206) de la structure de support (200, 240, 250) ; et
- un boîtier de nacelle (230) entourant au moins le châssis principal (210), la structure de support (200, 240, 250), le générateur (216) et ledit au moins un autre composant.

15. L'éolienne (100) selon la revendication 14, sachant que la deuxième section de maintien (206) comprend au moins une zone de base (284) destinée à supporter ledit au moins un autre composant, la zone de base (284) pouvant être détachée de la deuxième section de maintien (206) afin d'introduire et de retirer ledit au moins un autre composant dans un état monté de la structure de support (200, 240, 250), et sachant que la zone de base (284) correspond à une ouverture formée dans un fond du boîtier de nacelle (230).
